# EUROPEAN PATENT SPECIFICATION

(11) **EP 2 084 003 B1**
(45) Date of publication and mention of the grant of the patent: **17.04.2013**
(21) Application number: 07824099.1
(22) Date of filing: 09.10.2007
(51) Int. Cl.: B32B 37/14, A41D 31/00

(54) **A FLEXIBLE, IMPACT-RESISTANT LAMINATE AND A METHOD OF MANUFACTURING SAME**
FLEXIBLES, SCHLAGFESTES LAMINAT UND HERSTELLUNGSVERFAHREN DAFÜR
STRATIFIÉ RÉSISTANT AU CHOC, FLEXIBLE, ET PROCÉDÉ DE FABRICATION DE CELUI-CI

(30) Priority: 11.10.2006 GB 0620110
(43) Date of publication of application: 05.08.2009
(73) Proprietor: Stirling Moulded Composites Limited, Accrington BB5 0RR (GB)
(72) Inventor: TAYLOR, David, Stirling, Accrington BB5 0RR (GB)
(74) Representative: Bray, Lilian Janet
(86) International application number: PCT/GB2007/003845
(87) International publication number: WO 2008/044015

(56) References cited:
- WO-A-01/03530
- DE-C1- 3 641 609
- FR-A- 2 635 650
- JP-A- 2000 045 112
- US-A1- 2005 287 346

## Description

The present invention relates to a flexible, impact-resistant laminate and a method of manufacturing same.

WO 01/03530 discloses a flexible material comprising a plurality of separate resilient elements sandwiched between two layers of a flexible, resiliently stretchable substrate. Preferably, the elements comprise a closed cell polyethylene foam and the substrate comprises a stretchable knitted fabric.

Good impact-resistant materials are those that have good shock absorption, vibration isolation and vibration damping characteristics. Rubber and foam materials are good vibration isolators and absorbers and for this reason conventional flexible, impact-resistant materials tend to be manufactured either from closed-cell foam or from gel-setting rubbers. Closed-cell foam is lightweight and can be moulded into a variety of shapes. It can, therefore, be readily incorporated into protective wear, such as is described in WO 01/03530 above, suitable for the protection of human and animal bodies during, for example, sporting activities and the like. It has the disadvantage, however, that its impact-resistance is limited because, once crushed, it may be damaged and become unable to recover its original degree of springiness. In contrast, gel-setting rubbers have a good impact-resistance and resist damage. However, they are heavy, they do not hold their shape and they are expensive. Whilst they are suitable, therefore, for use in floor-coverings, such as in children's playgrounds, hospitals and on other surfaces where shock absorption and sound-proofing are required, they are difficult to use in protective wear, in upholstery, mattresses and other applications where weight and expense are important considerations.

The object of the present invention is to provide a flexible, impact-resistant laminate that overcomes or substantially mitigates the aforementioned disadvantages.

According to a first aspect of the present invention there is provided a flexible, impact-resistant laminate comprising
a first layer of a flexible material,
a second, impact-resistant layer comprising regions of a closed-cell foam; and
a third layer of a flexible material located on the opposite side of the impact-resistant layer to the first layer, the regions of closed-cell foam being bonded to both the first and the third layers;
characterised in that the second impact-resistance layer also comprises an impact-resistant material interposed between the regions of the closed-cell foam.

Preferably, the impact-resistant material substantially fills the spaces defined between the regions of the closed-cell foam.

Preferably also, at least one of the first and the third layers is resiliently stretchable or elastic and preferably comprises a fabric, although a resiliently stretchable film or sheet could be used. This enables the laminate to adopt a greater range of configurations and helps to prevent puckering of one side of the laminate when it is flexed. Suitable fabrics for use in protective wear and upholstery include knitted nylon and polyester fabrics and more particularly those comprising elastane.

Advantageously, both the first and the third layers of material are resiliently stretchable. However, in cases where only a single stretchable layer is provided and the laminate is to be used in a curved configuration the laminate is preferably arranged so that the stretchable layer lies on the outside surface of the curve.

Suitable fabrics for use in other applications, such as floor-coverings may include woven, heavy-duty fabrics made from natural or man-made materials.

Preferably also, the closed-cell foam is a closed-cell, polyethylene foam but, alternatively, comprises a number of different types of foam, for example layers of foam of different densities.

Preferably also, the impact-resistant material comprises an elastomeric material or a packing comprised of tightly packed beads or particles. Advantageously, the elastomeric material comprises a visco-elastic polymer, a gel-setting rubber or a siloxane. Preferably, however, the elastomeric material comprises a thermoset, polyether-based polyurethane material. In some embodiments, micro-beads such as polystyrene or polyurethane micro-beads may be mixed into the elastomeric material. Alternatively, when the packing is comprised of tightly packed beads or particles, these may comprise any or a combination of, for example, solid polymer spheres, sand, seeds (for example mustard seeds), polystyrene or polyurethane beads. The use of tightly packed beads rather than a solid elastomeric material may reduce the weight of the laminate and also increases its ability to flex. However, it will be appreciated that if beads are used, then the laminate must comprise the third layer in order that the beads are contained between the first and third outer layers of material.

Advantageously, the closed-cell foam is in the form of a cellular matrix the cells of which are filled with the impact-resistant material. Alternatively, the elastomeric material forms a cellular matrix the cells of which are filled with the closed-cell foam material. In this latter case, the foam material is in form of separate blocks of material, which could be of regular or irregular shape, for example hexagonal or octagonal in cross-section.

Preferably, the cells or blocks are evenly distributed between the outer layers with a density of between 100 and 8000 cells or blocks/m². For floor-coverings and the like the density can be lower than for protective wear as the greater the density, the greater the flexibility of the laminate. For the former a density between 250 and 8000 cells or blocks/m² is appropriate whereas for protective wear a density between 4000 and 6000 cells or blocks/m² is better as it allows the laminate to flex easily in all directions without "locking up" or preventing movement in a particular direction. Also, it enables the laminate to be cut into small pieces, for example to form protective wear of different sizes, without significantly affecting its ability to flex.

According to a second aspect of the present invention there is provided a method of manufacturing a flexible, impact-resistant laminate comprising the steps of
providing a first, flexible layer of material; bonding regions of a closed-cell foam to an inner side of the first layer;
providing an impact-resistant material in spaces defined between the regions of the closed-cell foam to form a second, impact resistant layer;
providing a third, flexible layer of material; and
bonding the closed-cell foam to an inner side of the third layer of material on the other side of the laminate to the first layer of material.

Preferably, the impact-resistant material comprises a thermoset, visco-elastic material which is introduced into the spaces defined between the regions of the closed-cell foam and allowed to set.

Alternatively, the impact-resistant material comprises a packing comprised of tightly packed beads or particles in the spaces defined between the regions of the closed-cell foam.

Preferably also, the closed-cell foam is bonded to the first and third layers by an adhesive.

Embodiments of the various aspects of the invention will now be described by way of example with reference to the accompanying drawings, in which:
Figs. 1, and 2 are schematic transverse cross-sectional views of first and second embodiments, respectively, of a flexible, impact-resistant laminate according to the first aspect of the present invention;
Fig. 3 is a plan view of a cellular matrix forming part of an impact-resistant layer incorporated in the first and second embodiments shown in Figs. 1 and 2;
Fig. 4 is a plan view of a first embodiment of cutter grid for use in a method according to the second aspect of the present invention;
Fig. 5 is a vertical cross-section, to an enlarged scale, through part of the cutter grid as shown in Fig. 4; and
Figs. 6 to 10 are a series of diagrams showing various stages during the manufacture of a laminate as shown in Fig. 1.

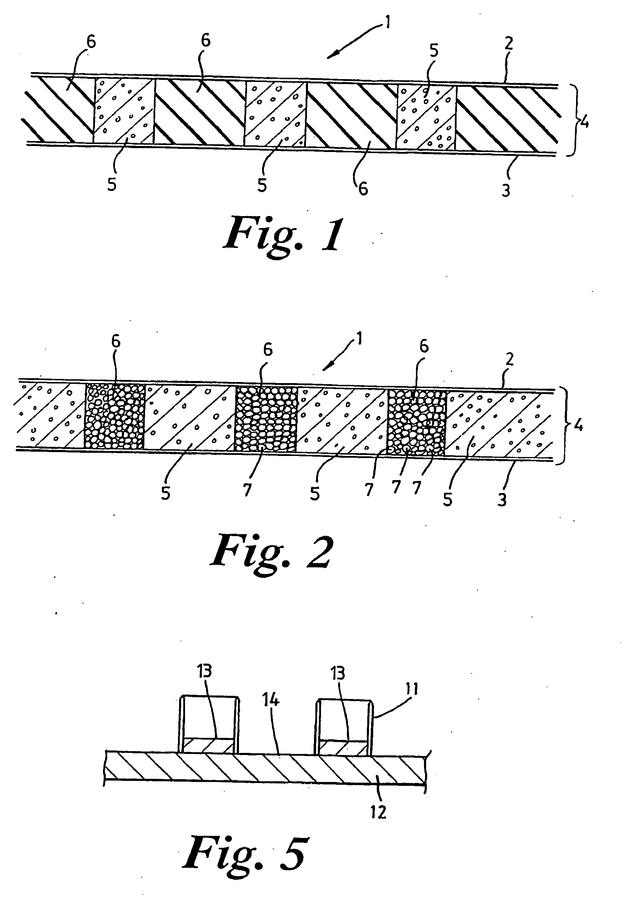

Referring to Figs. 1 and 2, a flexible, impact-resistant laminate 1 comprises a two outer layers 2, 3 of a flexible material between which is located an impact-resistant impact layer 4. If the laminate is to be used in the production of protective wear or upholstery, the outer layers 2 and 3 are both preferably made of a resiliently stretchable knitted fabric, advantageously one comprising polyester or elastane fibres. However, in a laminate for use as a floor-covering, sound-proofing or in heavy duty situations, then the layers 2 and 3 can be made of a hard-wearing fabric or film that does not need to be stretchable. Suitable films include sheets of polyethylene or polyurethane. Also, in some applications, only one layer 2 is needed, the layer 3 being unnecessary. The impact-resistant layer 4 comprises regions 5 of a closed-cell foam that are bonded to the outer layers 2 and 3 and interspersed with regions of an impact-resistant material 6. The closed-cell foam is preferably a resilient, closed-cell polyethylene foam.

In the first embodiment shown in Fig. 1, the impact-resistant material 6 comprises an elastomeric material, which is preferably a visco-elastic polymer, a gel-setting rubber or a siloxane. Advantageously, however, the elastomeric material comprises a thermoset, polyether-based polyurethane material such as is sold under the trade mark SORBATHANE by Sorbathane, Inc. This material is initially in a liquid form prior to curing and then cold-cures into a visco-elastic state which facilitates production of the laminate as described below. Dependent on the use to which the laminate is to be put, micro-beads such as polystyrene beads may be mixed into the elastomeric material. The addition of such beads may reduce the flexibility of the material but improve the dissipation of forces resulting from impacts. This is advantageous, for example, in floor-coverings.

In the second embodiment shown in Fig. 2, the impact-resistant material 6 comprises tightly packed beads or particles 7, example of which have been given above. Beads or particles packed in this way have good shock absorption, vibration isolation and vibration damping characteristics because their packing enables each one to move slightly relative to the others which means that as a whole they act to absorb impact energy.

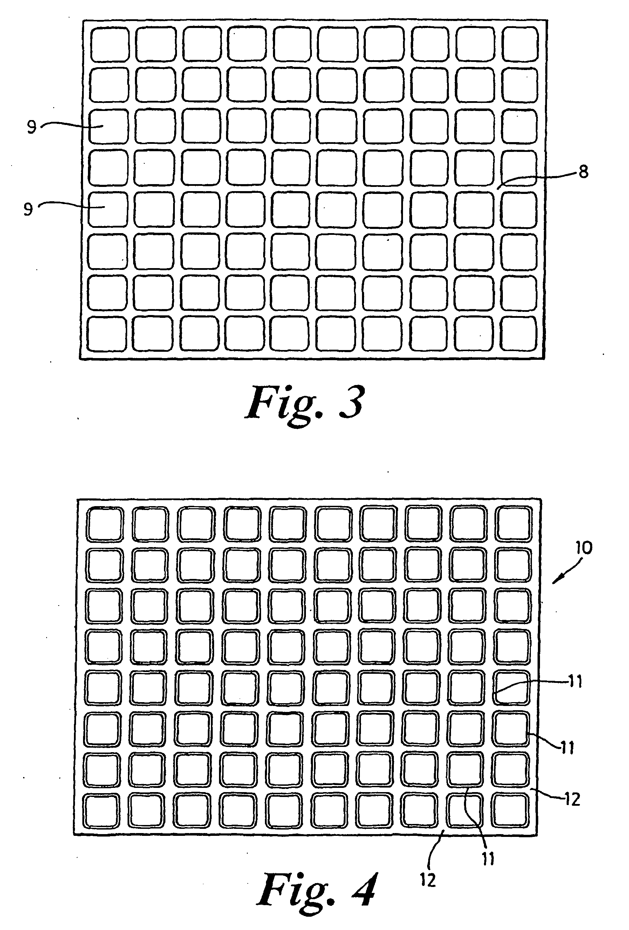

The type of impact-resistant material 6 that is used in the laminate 1 and the use to which the laminate is to be put determines the shape and size of the foam regions 5. Advantageously, the closed-cell foam regions are in the form of a cellular matrix 8, as shown in Fig. 3. The cells 9 of the matrix 8 are filled with the impact-resistant material 6. Such an arrangement can facilitate production, as is described below, because the cells 9 will contain, for example, a liquid impact-resistant material 6 prior to setting and also retain a packing such as the beads or particles 7 whilst the second outer layer 3 (not shown in Fig. 3) is bonded to the matrix 8, as is described below. The cells 8 could be of regular or irregular shape, for example square, hexagonal or octagonal in cross-section.

However, it will be appreciated that the foam regions 5 could be discrete so that the impact-resistant material 6 will effectively form a cellular matrix surrounding cells of foam material.

Fig. 4 shows a plan view of a first embodiment of cutter 10 used for manufacturing the matrix 8 shown in Fig. 3. The cutter 10 comprises a plurality of blades 11 mounted on a back-board 12. The blades 11 define a plurality of squares which define the size of the cells 9. If the laminate 1 is for use in protective wear, for example, the square blades 11 may have sides that are 12 mm long with corners of radius 2.5 mm. Also, the height of the blades 11 of the cutter 10 are arranged to be slightly smaller than the thickness of foam sheet with which the cutter 10 is to be used.

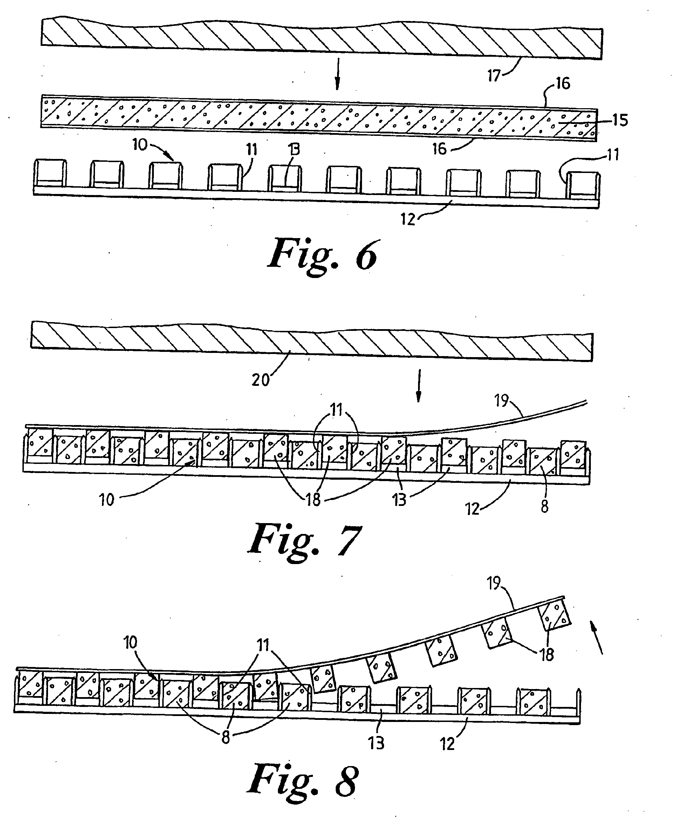

Fig. 5 is a diagram showing a vertical section through one of the blades 11 and the surrounding board 12. It can be seen that within each of the cutter blades 11 is a block 13 which has an upper surface at a level higher than the upper level 14 of the board 12 outside the cutter blades 11. This means that when the cutter 10 is used to cut a sheet of foam 15, the foam is cut into cubes 18 located within the blades 11 and a cellular matrix 8 surrounding the square blades 11 but the foam cubes 18 within the blades are raised above the level of the matrix 8 after cutting. The reason for this will now be explained and the steps involved in manufacturing a laminate using the cutter shown in Figs. 4 and 5 will now be described with reference to the sequence of drawings as shown in Figs. 6 to 10.

First, both sides of a 12 mm thick sheet 15 of closed cell foam is coated on both sides with a hot melt adhesive 16. The foam 15 is then placed over a cutter 10, of the type shown in Figs. 4 and 5, and either pressed down with a press 17, as shown in Fig. 6, or passed through nip rollers (not shown) so that the cutter 10 cuts through the foam 15 to form a cellular matrix 8, as shown in Fig. 3, and a plurality of separate cubes 18. Once the press 17 is removed, owing to its springy nature the foam 15 will tend to spring back slightly so that its upper surface stands proud above the upper surface of the cutter 10 as defined by the edges of the blades 11. However, as the foam cubes 18 within the blades are supported by the blocks 13 at a higher level than the cellular matrix 8, the cubes 18 stands proud of the surface of the matrix 8 as shown in Fig, 7. The cutter 10 therefore acts as a jig, holding the cut foam in position during the next stage of the manufacturing process.

Next, as shown in Fig. 7, a first layer of material 19 is placed over the foam 15 and the cutter 10. In view of the difference in height between the cellular matrix 8 and the cubes 18, the inner surface of the material 19 only contacts the upper surface of the cubes 18. A heated platen 20 is now brought into contact with outer surface of the material 19 and heat is conducted through the material 19 to the foam of the cubes 18 which activates the adhesive coating 16. This bonds the material 19 to the cubes 18 but not to the cellular matrix 8. Once the adhesive has been activated, the material 19 can be lifted away from the cutter 10 taking the cubes 18 with it and leaving the cellular matrix 8 behind, as shown in Fig. 8. The cellular matrix 8 is then also bonded to another layer of flexible material 19 in exactly the same way as the cubes 8. Hence, none of the foam sheet 15 need be wasted, which is advantageous because it is both expensive to produce and to dispose of as a waste product. It will be appreciated, therefore, that preferably the cutter 10 is adapted to cut the foam sheet 15 into two tessellating patterns which are both suitable for use in the production of a laminate according to the invention, each pattern having foam regions that are neither too small nor too narrow to be practical. For, example, the patterns may comprise one which forms a cellular matrix and the other foam blocks, as in the illustrated embodiment, or both could form blocks in a chequerboard pattern or similar with square or other polygonal shapes. The patterns may also define stripes or swirling patterns. The patterns could also be specially adapted and bespoke for particular applications of the laminate as such a laminate will have different properties in different areas and when flexed in different directions.

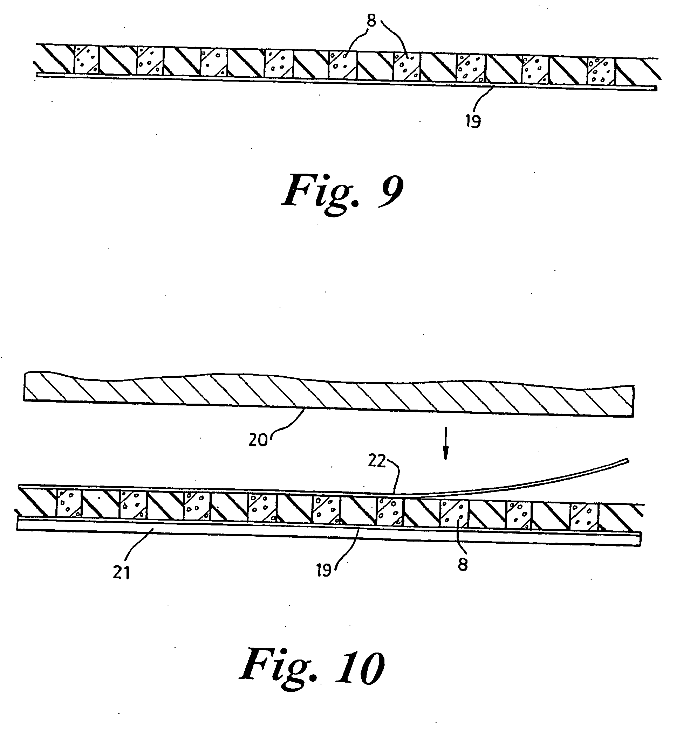

Once the cellular matrix 8 has been bonded to a first layer of material 19, an impact-resistant material 6, as previously described, can be introduced into the cells 9. If an elastomeric material is to be used, the partially made laminate is supported on a board 21 with the cellular matrix 8 uppermost and the elastomeric material is then poured, scraped or sprayed into the cells 9 in a liquid state and then cured or allowed to set, as shown in Fig. 9. Alternatively, if the impact-resistant material 6 comprises a plurality of tightly packed beads or particles, these are packed tightly into the cells 9. Thereafter, the cells 9 are closed by bonding a second layer of flexible material 22 to the other side of cellular matrix using a heated platen 20 in the same way as the first layer of material 19, as shown in Fig.10_{.}

With foam in the form of the cubes 18, it is still possible to introduce an impact-resistant material 6, as described above, into the spaces between the cubes 18 by supporting the partially made laminate within a tray (not shown). Again, a second layer of a flexible material 22 is then bonded to the other side of cellular matrix using a heated platen in the same way as the first layer of material 19.

Variations to the above method are possible, for example the closed-cell foam may be fused to the layers 19 and 22 by the application of heat so that it partially melts on the surface rather than being adhered thereto. Ejectors could also be used to separate the parts of the foam sheet after it has been cut rather than using the block arrangement 13. In addition, if an elastomeric material is used in the impact-resistance layer between the regions of closed-cell foam, then in some applications the second layer of material 22 can be dispensed with, the laminate comprising simply the first layer of flexible material 19 and the impact resistance layer comprising the elastomeric material interposed between the closed-cell foam regions.

## Claims

1. A flexible, impact-resistant laminate (1) comprising
a first layer of a flexible material (2),
a second, impact-resistant layer (4) comprising regions of a closed-cell foam (5); and
a third layer (3) of a flexible material located on the opposite side of the impact-resistant layer (4) to the first layer (2), the regions of closed-cell foam being bonded to both the first and the third layers (2, 3);
**characterised in that**
the second impact-resistance layer (4) also comprises an impact-resistant material (6) interposed between the regions of the closed-cell foam (5).

2. A laminate as claimed in Claim 1, wherein the impact-resistant material (6) substantially fills the spaces (9) defined between the regions of the closed-cell foam (5).

3. A laminate as claimed in Claim 1 or Claim 2, wherein at least one of the first and third layers (2, 3) is resiliently stretchable or elastic.

4. A laminate as claimed in any of Claims 1 to 3, wherein the first and/or third layer (2, 3) comprises a fabric or film.

5. A laminate as claimed in any of Claims 1 to 4, wherein the closed-cell foam (5) is a closed-cell polyethylene foam.

6. A laminate as claimed in any of Claims 1 to 5, wherein the impact-resistant material (6) comprises an elastomeric material.

7. A laminate as claimed in Claim 6, wherein the elastomeric material (6) comprises a thermoset, polyether-based polyurethane material.

8. A laminate as claimed in Claim 6 or Claim 7, wherein micro-beads are mixed into the elastomeric material (6).

9. A laminate as claimed in any of Claims 1 to 8, where the impact resistant material (4) is comprised of tightly packed beads or particles (7).

10. A laminate as claimed in Claim 9, wherein the tightly packed beads or particles (7) comprise any or a combination of, solid polymeric spheres, sand, seeds, polystyrene beads and polyurethane beads.

11. A laminate as claimed in any of Claims 1 to 10, wherein the closed-cell foam (5) is in the form of a cellular matrix, the cells of which are filled with the impact-resistant material (6).

12. A laminate as claimed in any of Claims 1 to 11, wherein the closed-cell foam (5) is in the form of separate blocks of material.

13. A method of manufacturing a flexible, impact-resistant laminate (1) comprising the steps of
providing a first, flexible layer of material (2; 19);
bonding regions of a closed-cell foam (5; 8, 18) to an inner side of the first layer (2; 19);
providing an impact-resistant material (6) in spaces (9) defined between the regions of the closed-cell foam (5; 8, 18) to form a second, impact resistant layer (4);
providing a third, flexible layer of material (3; 22); and bonding the closed-cell foam (5; 8, 18) to an inner side of the third layer of material (3; 22) on the other side of the laminate (1) to the first layer of material (2; 19).

14. A method as claimed in Claim 13, wherein the impact-resistant material (6) comprises a thermoset, visco-elastic material which is introduced into the spaces (9) defined between the regions of the closed-cell foam (5; 8, 18) and allowed to set.

15. A method as claimed in Claim 13, wherein the impact-resistant material (6) comprises a packing comprised of tightly packed beads or particles (7) in the spaces defined between the regions of the closed-cell foam (5); 8,18).

16. A method as claimed in any of Claims 13 to 15, wherein the closed-cell foam (5) is bonded to the first and/or third layers of material (2, 3) by an adhesive (16).

## Patentansprüche

1. Flexibles, schlagfestes Laminat (1), das folgendes aufweist:
- eine erste Schicht aus einem flexiblen Material (2),
- eine zweite schlagfeste Schicht (4), die Bereiche aus einem geschlossenzelligen Schaum (5) aufweist;
- eine dritte Schicht (3) aus einem flexiblen Material, die sich auf der gegenüberliegenden Seite der schlagfesten Schicht (4) zu der ersten Schicht (2) befindet, wobei die Bereiche aus geschlossenzelligem Schaum sowohl mit der ersten als auch mit der dritten Schicht (2, 3) verbunden sind;
**dadurch gekennzeichnet,**
**dass** die zweite schlagfeste Schicht (4) auch ein schlagfestes Material (6) aufweist, das sich zwischen Bereichen des geschlossenzelligen Schaums (5) befindet.

2. Laminat nach Anspruch 1,
wobei das schlagfeste Material (6) im wesentlichen die Räume (9) ausfüllt, die zwischen den Bereichen des geschlossenzelligen Schaums (5) ausgebildet sind.

3. Laminat nach Anspruch 1 oder 2,
wobei mindestens eine von der ersten Schicht und der dritten Schicht (2, 3) nachgiebig dehnbar oder elastisch ist.

4. Laminat nach einem der Ansprüche 1 bis 3,
wobei die erste Schicht und/oder die dritte Schicht (2, 3) ein textiles Flächengebilde oder eine Folie aufweist.

5. Laminat nach einem der Ansprüche 1 bis 4,
wobei der geschlossenzellige Schaum (5) ein geschlossenzelliger Polyethylenschaum ist.

6. Laminat nach einem der Ansprüche 1 bis 5,
wobei das schlagfeste Material (6) ein elastomeres Material aufweist.

7. Laminat nach Anspruch 6,
wobei das elastomere Material (6) ein wärmehärtbares, auf Polyether basierendes Polyurethan-Material aufweist.

8. Laminat nach Anspruch 6 oder 7,
wobei Mikrokügelchen in das elastomere Material (6) eingemischt sind.

9. Laminat nach einem der Ansprüche 1 bis 8,
wobei das schlagfeste Material (4) dicht gepackte Kügelchen oder Partikel (7) aufweist.

10. Laminat nach Anspruch 9,
wobei die dicht gepackten Kügelchen oder Partikel (7) eines oder eine Kombination von Materialien aus den folgenden aufweist: feste Polymerkügelchen, Sand, Körner, Polystyrolkügelchen und Polyurethankügelchen.

11. Laminat nach einem der Ansprüche 1 bis 10,
wobei der geschlossenzellige Schaum (5) in Form einer Zellenmatrix vorliegt, deren Zellen mit dem schlagfesten Material (6) gefüllt sind.

12. Laminat nach einem der Ansprüche 1 bis 11,
wobei der geschlossenzellige Schaum (5) in Form von separaten Materialblöcken vorliegt.

13. Verfahren zum Herstellen eines flexiblen, schlagfesten Laminats (1), das folgende Schritte aufweist:
- Vorsehen einer ersten, flexiblen Materialschicht (2; 19);
- Verbinden von Bereichen eines geschlossenzelligen Schaums (5; 8, 18) mit einer Innenseite der ersten Schicht (2; 19);
- Vorsehen eines schlagfesten Materials (6) in Räumen (9), die zwischen den Bereichen des geschlossenzelligen Schaums (5; 8, 18) ausgebildet sind, um eine zweite, schlagfeste Schicht (4) zu bilden;
- Vorsehen einer dritten, flexiblen Materialschicht (3; 22); und
- Verbinden des geschlossenzelligen Schaums (5; 8, 18) mit einer Innenseite der dritten Materialschicht (3; 22) auf der anderen Seite des Laminats (1) zu der ersten Materialschicht (2; 19).

14. Verfahren nach Anspruch 13,
wobei das schlagfeste Material (6) ein wärmehärtbares, viskoelastisches Material aufweist, das in die Räume (9) eingeführt wird, welche zwischen den Bereichen des geschlossenzelligen Schaums (5; 8, 18) ausgebildet sind, und dann aushärten gelassen wird.

15. Verfahren nach Anspruch 13,
wobei das schlagfeste Material (6) eine Packung aufweist, die dicht gepackte Kügelchen oder Partikel (7) in den Räumen aufweist, die zwischen den Bereichen des geschlossenzelligen Schaums (5; 8, 18) ausgebildet sind.

16. Verfahren nach einem der Ansprüche 13 bis 15,
wobei der geschlossenzellige Schaum (5) mit der ersten Materialschicht und/oder der dritten Materialschicht (2, 3) mit einem Klebstoff (16) verbunden wird.

## Revendications

1. Stratifié flexible résistant au choc (1) comprenant une première couche d'un matériau flexible (2),
une deuxième couche résistante au choc (4) comprenant des régions d'une mousse à alvéoles fermées (5) ; et
une troisième couche (3) d'un matériau flexible positionnée sur le côté opposé de la couche résistante au choc (4) à la première couche (2), les régions de la mousse à alvéoles fermées étant reliées à la fois à la première et à la troisième couche (2, 3) ;
**caractérisé en ce que**
la deuxième couche résistante au choc (4) comprend également un matériau résistant au choc (6) intercalé entre les régions de la mousse à alvéoles fermées (5).

2. Stratifié selon la revendication 1, dans lequel le matériau résistant au choc (6) remplit sensiblement les espaces (9) définis entre les régions de la mousse à alvéoles fermées (5).

3. Stratifié selon la revendication 1 ou la revendication 2, dans lequel au moins l'une des première et troisième couches (2, 3) est élastiquement extensible ou élastique.

4. Stratifié selon l'une quelconque des revendications 1 à 3, dans lequel la première et/ou la troisième couche (2, 3) comprend (comprennent) un tissu ou film.

5. Stratifié selon l'une quelconque des revendications 1 à 4, dans lequel la mousse à alvéoles fermées (5) est une mousse de polyéthylène à alvéoles fermées.

6. Stratifié selon l'une quelconque des revendications 1 à 5, dans lequel le matériau résistant au choc (6) comprend un matériau élastomère.

7. Stratifié selon la revendication 6, dans lequel le matériau élastomère (6) comprend un matériau thermodurci en polyuréthane à base de polyéther.

8. Stratifié selon la revendication 6 ou la revendication 7, dans lequel des micro-perles sont mélangées dans le matériau élastomère (6).

9. Stratifié selon l'une quelconque des revendications 1 à 8, dans lequel le matériau résistant au choc (4) est composé de perles ou particules (7) conditionnées de manière serrée.

10. Stratifié selon la revendication 9, dans lequel les perles ou particules (7) conditionnées de manière serrée comprennent l'un quelconque ou une combinaison composée de sphères polymères solides, sable, graines, perles de polystyrène et perles de polyuréthane.

11. Stratifié selon l'une quelconque des revendications 1 à 10, dans lequel la mousse à alvéoles fermées (5) se présente sous la forme d'une matrice cellulaire, dont les alvéoles sont remplies avec le matériau résistant au choc (6).

12. Stratifié selon l'une quelconque des revendications 1 à 11, dans lequel la mousse à alvéoles fermées (5) se présente sous la forme de blocs séparés de matériau.

13. Procédé pour fabriquer un stratifié flexible résistant au choc (1), comprenant les étapes consistant à
prévoir une première couche flexible de matériau (2, 19) ;
relier les régions d'une mousse à alvéoles fermées (5 ; 8, 18) à un côté interne de la première couche (2 ; 19) ;
prévoir un matériau résistant au choc (6) dans des espaces (9) définis entre les régions de la mousse à alvéoles fermées (5 ; 8, 18) afin de former une deuxième couche résistante au choc (4) ;
prévoir une troisième couche flexible de matériau (3 ; 22) ; et
relier la mousse à alvéoles fermées (5 ; 8, 18) à un côté interne de la troisième couche de matériau (3 ; 22) sur l'autre côté du stratifié (1) à la première couche de matériau (2 ; 19).

14. Procédé selon la revendication 13, dans lequel le matériau résistant au choc (6) comprend un matériau viscoélastique thermodurci qui est introduit dans les espaces (9) définis dans les régions de la mousse à alvéoles fermées (5 ; 8, 18) et autorisés à durcir.

15. Procédé selon la revendication 13, dans lequel le matériau résistant au choc (6) comprend un conditionnement composé de perles ou particules (7) conditionnées de manière serrée dans les espaces définis entre les régions de la mousse à alvéoles fermées (5 ; 8, 18).

16. Procédé selon l'une quelconque des revendications 13 à 15, dans lequel la mousse à alvéoles fermées (5) est reliée à la première et/ou troisième couche de matériau (2, 3) par un adhésif (16).
